# EUROPÄISCHE PATENTSCHRIFT

(11) **EP 1 757 426 B1**
(45) Veröffentlichungstag und Bekanntmachung des Hinweises auf die Patenterteilung: **21.10.2009**
(21) Anmeldenummer: 06118652.4
(22) Anmeldetag: 09.08.2006
(51) Int. Cl.: B29C 44/12

(54) **Verfahren zur Herstellung eines Verbundelements enthaltend Polyisocyanat-Polyadditionsprodukte, insbesondere eines Warmwasserspeichers enthaltend Polyurethane**
Process for producing a composite element comprising polyisocyanate-polyaddition products, in particular a hot water storage comprising polyurethane
Procédé de fabrication d'un élément composite comprenant des produits de polyaddition de polyisocyanate, notamment d'un chauffe-eau à accumulation comprenant du polyuréthane

(30) Priorität: 23.08.2005 DE 102005039973
(43) Veröffentlichungstag der Anmeldung: 28.02.2007
(73) Patentinhaber: BASF SE, 67056 Ludwigshafen (DE)
(72) Erfinder: Fricke, Bernd, 49448, Quernheim (DE)

(56) Entgegenhaltungen:
- EP-A1- 1 046 659
- WO-A-00/04070

## Beschreibung

Die Erfindung betrifft ein Verfahren zur Herstellung eines Verbundelements enthaltend mindestens eine kompakte Komponente (i), Hartschaumstoff auf Basis von Polyisocyanat-Additionsprodukten (ii) und mindestens eine weitere kompakte Komponente (iii), wobei man mindestens eine tragende, kompakte Komponente (i) und mindestens eine weitere kompakte Komponente (iii) zur Verfügung stellt, die weitere Komponente (iii) von der tragenden Komponente gehalten wird, die weitere Komponente (iii) die tragende Komponente (i) umgibt und mit dieser einen Raum (iv) bildet und im Raum (iv) Isocyanate mit gegenüber Isocyanaten reaktiven Verbindungen umsetzt, wobei die Reaktionsmischung des weiteren Treibmittel und gegebenenfalls Katalysatoren, Hilfs- und/oder Zusatzstoffen enthält, **dadurch gekennzeichnet, dass** die weitere kompakte Komponente (iii) eine Mantelkomponente (iii a), eine Bodenkomponente (iii b) und eine Deckenkomponente (iii c) aufweist, die zur Mantelkomponente (iii a) abschließen, und wobei die Bodenkomponente (iii b) und die Deckenkomponente (iii c) jeweils an der tragenden Komponente (i) befestigt sind oder die Bodenkomponente, (iii b) und/oder die Deckenkomponente (iii c) durch eine Komponente zur Verstärkung (v), die an der vom Raum (iv) abgewandten Seite der Bodenkomponente (iii b) und/oder der Deckenkomponente (iii c) angeordnet ist und an der tragenden Komponente (i) befestigt ist, gehalten werden.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils angegebenen Kombination, sondern auch in anderen Kombinationen verwendbar sind, ohne den Rahmen der Erfindung zu verlassen.

Der Einsatz von Hartschaumstoffen auf der Basis von Polyisocyanat-Polyadditionsprodukten, üblicherweise Polyurethanen (PUR) und/oder Polyisocyanuraten (PIR), als Material zur thermischen Isolierung ist allgemein bekannt. Derartige Schaumstoffe kommen beispielsweise in gedämmten Rohren, Sandwichelementen, Kühlschränken und Warmwasserspeichern zum Einsatz. Die Herstellung z. B. der Warmwasserspeicher erfolgt im allgemeinen dadurch, dass man die Ausgangskomponenten zur Herstellung der Schaumstoffe mit üblichen Verarbeitungsmaschinen in den Zwischenraum von Innenbehälter und Außenmantel einbringt. Durch das anschließende Aufschäumen wird der Hohlraum völlig ausgefüllt.

Durch das Einbringen eines Reaktionsgemisches zur Herstellung von Polyurethanen in einen Hohlraum dehnt sich das Gemisch in Folge der durch die Reaktion entstehenden Gasbildung aus. Es findet also eine Volumenvergrößerung des Reaktionsgemisches statt. Diese ist vor allem von der eingebrachten Menge des Reaktionsgemisches abhängig.

Ein Problem beim Ausschäumen der Zwischenräume ist, dass das Volumen des Reaktionsgemischs in der letzten Reaktionsphase leicht abnimmt und der Schaumstoff schrumpft. Um dieser Volumenabnahme zu begegnen, den Hohlraum völlig auszufüllen und aus dem Reaktionsgemisch einen stabilen, schrumpfunempfindlichen PUR-Hartschaum herzustellen, ist es notwendig, eine größere Menge des Reaktionsgemisches in den auszuschäumenden Hohlraum einzufüllen und diesen zu überfüllen. Dadurch wird das Reaktionsgemisch verdichtet und es entsteht ein erhöhter Druck auf die Wandungen des Hohlraums, der sogenannte Schäumdruck, dem der zu verschäumende Gegenstand standhalten muss. Um diesem Druck standzuhalten und einer Deformation entgegenzuwirken, sind sehr aufwendige, temperierbare Stützformen notwendig. Diese Stützformen dienen zur Erhaltung der ursprünglichen äußeren Form des Außenmantels, in dieser Schrift auch als Komponente (iii) bezeichnet, und kosten pro Stück ca. 10.000 bis 300.000 €.

Der Produktionsprozess mit Stützformen ist aufwendig, da diese be- und entladen werden müssen. Zusätzlich ist eine Formenverweilzeit notwendig, die von der Aushärtung des Reaktionsgemisches abhängt. Um große Stückzahlen fertigen zu können, sind insofern oft mehrere Stützformen für eine einzige Produktserie notwendig. Verändern sich die äußeren Konturen an den auszuschäumenden Produkten, sind gleichzeitig Änderungen an den Stützwerkzeugen notwendig, was jeweils mit sehr hohen Kosten verbunden ist. Bei kleineren Produktstückzahlen gehen die Werkzeugkosten gravierend in die Gesamtkosten ein, da die Stützwerkzeuge für Kleinserien ebenso aufwendig gebaut sein müssen, wie bei großen Stückzahlen.

Verbundelemente, die ohne zusätzliche Stützform gefertigt werden, d.h. ohne Einrichtungen, die gewährleisten, dass durch die Ausschäumung Innenbehälter und insbesondere Außenmantel ihre Form behalten, sind selbsttragend konstruiert und können deshalb nur einem geringen Schäumdruck standhalten. Unter dem Ausdruck "selbsttragend" ist im Folgenden zu verstehen, dass die entsprechenden Elemente beim Ausschäumen auch ohne zusätzliche Stützelemente ihre dreidimensionale Form nicht verlieren. Dabei werden die Elemente als tragende Elemente bezeichnet, die die Kraft durch den Schäumdruck (vi) aufnehmen.

Im Stand der Technik sind auch Verfahren zur Herstellung solcher selbsttragender Verbundelemente bekannt. Dabei besteht der Außenbehälter aus Mantelkomponente und Deckenkomponente, wobei während dem Ausschäumen die Deckenkomponente an der Mantelkomponente befestigt ist. Da eine solche Konstruktion nur wenig druckbeständig ist, ist ein solches Verbundelement nur durch die Verwendung von speziellen Formulierungen, die meist halogenierte Kohlenwasserstoffen als Treibmittel und spezielle Katalysatoren enthalten, möglich. Diese Formulierungen zeichnen sich dadurch aus, dass die daraus hergestellten Schäume nur wenig schrumpfen. Somit ist bei Verwendung dieser Formulierungen nur eine geringe Überfüllung nötig, wodurch auch nur ein geringer Schäumdruck resultiert und aufwendige Stützformen nicht benötigt werden. Allerdings ist sind diese Formulierungen teuer und nur wenig umweltfreundlich.

Eine weitere Möglichkeit zur Herstellung selbsttragender Verbundelemente ohne die Verwendung äußerer Stützformen ist in EP 1 046 659 offenbart. Um dem Schäumdruck standzuhalten, die beim Schäumen auftreten, wird die äußere Hülle des Verbundelements als Druckkörper konstruiert, der die Kräfte durch den Schäumdruck aufnehmen kann. Dabei werden Boden und Deckel mit einer gewölbten Form verwendet. Ein Verbundelement nach EP 1 046 659 ist bis zu einem Druck maximalen Druck von 1,25 bar verwendbar.

Ausgehend von EP 1 046 659 wäre es jedoch wünschenswert, ein Verbundelement zu liefern, dass auch bei Drücken größer 1,25 bar stabil ist, um eine größere Flexibilität bei der Auswahl möglicher Treibmittel und Katalysatoren zu haben.

Aufgabe der Erfindung war es daher ein Verfahren zur Herstellung eines selbsttragenden Verbundelements, insbesondere eines Warmwasserspeichers, mit einer kompakten, tragenden Komponente (i), Hartschaumstoff auf Basis von Polyisocyanat-Additionsprodukten (ii), der bevorzugt keine halogenierte Kohlenwasserstoffe als Treibmittel enthält, und mindestens einer weitere kompakte Komponente (iii) zu liefern, das eine einfache Form mit möglichst ebenen Boden aufweist, um als Standelemente verwendet werden zu können.

Weiter war es Aufgabe der Erfindung selbsttragende Verbundelemente zu liefern, die kostengünstig zu fertigen sind.

Schließlich war es Aufgabe der Erfindung, solche selbsttragende Verbundelemente zu liefern, bei deren Herstellung alle üblichen Treibmittel verwendet werden können.

Diese Aufgaben konnte durch das eingangs beschriebene Verfahren zur Herstellung eines Verbundelements gelöst werden. Die erfindungsgemäßen Verbundelemente können beispielsweise in Ausgestaltungen als Rohr, Sandwichelement oder bevorzugt in Form von thermisch isolierten Behältern für Flüssigkeiten oder Gasen, bevorzugt Flüssigkeiten vorliegen. Z.B. können die Verbundelemente in Kühlschränken oder bevorzugt in Warmwasserspeichern enthalten sein.

Erfindungsgemäß wird die Komponente (iii) von der Komponente (i) gehalten. Unter dem Ausdruck "gehalten" ist allgemein zu verstehen, dass die gehaltene Komponente auch beim Einwirken von Kräften ihre Position innerhalb der Verbundkomponente behält. Die einwirkenden Kräfte werden dabei auf die haltende Komponente übertragen. Dies gilt insbesondere für Kräfte, die während der Umsetzung von Isocyanaten mit gegenüber Isocyanaten reaktiven Verbindungen. Dabei wird die Komponente (iii) an der Komponente (i) befestigt, gegebenenfalls über Abstandshalter, besonders bevorzugt durch verschrauben. Sind die auftretenden Kräfte Kräfte, die während der Umsetzung von Isocyanaten mit gegenüber Isocyanaten reaktiven Verbindungen auftreten, sind haltende Komponente und tragende Komponente synonym zu verstehen.

Die Komponenten (i) und (iii) stellen die Materialien dar, zwischen denen der Hartschaumstoff der Komponente (ii), bevorzugt haftend an (i) und (iii), angeordnet ist. Beispielsweise kann (iii) eine äußere Haut oder einen äußeren Mantel darstellen und (i) die innere Komponente, in der sich das thermisch zu isolierende Gut, z.B. die Flüssigkeit oder das Gas, befindet. Im Falle der Ausgestaltung der Verbundelemente in Warmwasserspeichern stellt beispielsweise (iii) die äußere Haut dar, während (i) den Innenbehälter bildet. Diese Ausgestaltung, in der (iii) eine äußere Wand und (i) einen inneren Behälter darstellt und (ii) zwischen (i) und (iii) angeordnet ist, stellt eine bevorzugte Ausführungsform dar.

Die Komponente (i), bevorzugt der Innenbehälter eines Warmwasserspeichers, kann beispielsweise auf üblichen, bevorzugt thermoplastischen Kunststoffen, z.B. Polystyrol, ABS, ASA, Polypropylen, Polyethylen, bevorzugt Metalle, wie Stahl, Aluminium und/oder Kupfer, basieren. Bevorzugt ist (i), insbesondere in der Ausgestaltung als Innenbehälter in Warmwasserspeichern, aus Kupfer und/oder Stahl gefertigt, wobei die Oberfläche gegebenenfalls emailliert sein kann. Die Dicke von (i) beträgt bevorzugt 1 bis 4 mm

Für die Komponente (iii), bevorzugt dem Außenmantel eines Warmwasserspeichers, können allgemein bekannte Materialien eingesetzt werden, beispielsweise bekannte Kunststoffe, z.B. Polystyrol, ABS, ASA, Polypropylen, Polyethylen oder Metalle, wie Stahl, Aluminium und/oder Kupfer.

Bei einem Verbundelement hergestellt nach dem erfindungsgemäßen Verfahren weist die weitere kompakte Komponente (iii) eine Mantelkomponente (iii a), eine Bodenkomponente (iii b) und eine Deckenkomponente (iii c) auf, wobei die Bodenkomponente (iii b) und die Deckenkomponente (iii c) jeweils an der tragenden Komponente (i) befestigt sind beziehungsweise, falls eine Komponente zur Verstärkung (v) verwendet wird, von dieser gehalten werden, und zur Mantelkomponente (iii a) abschließen. Die Mantelkomponente (iii a) wird durch die Bodenkomponente (iii b) und die Deckenkomponente (iii c) gehalten. Dieses Halten der Mantelkomponente (iii a) erfolgt vorzugsweise durch einen überstehenden Rand an Boden und Deckenkomponente. Zwischen Boden bzw. Deckenkomponente und Mantelkomponente befindet sich vorzugsweise eine Dichtkomponente, die einen Schaumaustritt verhindert.

Die Befestigung der Bodenkomponente (iii b) an der tragenden Komponente (i) erfolgt vorzugsweise über mindestens einen Abstandshalter (vi). Diese sind bevorzugt an der tragenden Komponente (i) sowie an der Bodenkomponente (iii b) befestigt und tragen vorzugsweise das Gewicht der tragenden Komponente (i) sowie gegebenenfalls des Inhalts der tragenden Komponente (i). Vorzugsweise werden der oder die Abstandshalter (vi) mit der Bodenkomponente verschraubt.

Die Deckenkomponente (iii c) wird in einer bevorzugten Ausführungsform vorzugsweise an mindestens einer Zu- bzw. Ableitung (vii) der tragenden Komponente (i) befestigt, insbesondere durch Verschrauben.

Vorzugsweise bestehen die Bodenkomponente (iii b) und die Deckenkomponente (iii c) aus Kunststoff, besonders bevorzugt aus Polystyrol, ABS, ASA, Polypropylen oder Polyethylen.

Ebenfalls bevorzugt ist, dass sowohl die Bodenkomponente (iii b) als auch die Deckenkomponente (iii c) jeweils im wesentlichen eben sind. Mögliche Abweichungen von der Ebene können Befestigungsmöglichkeiten bilden. Vorzugsweise bilden die Mantelkomponente (iii a), die Bodenkomponente (iii b) und die Deckenkomponente (iii c) einen zylindrischen Körper. In einer besonders bevorzugten Ausführungsform wird das Verbundelement mit der Bodenkomponente auf einem weiteren Gegenstand abgestellt.

In einer besonders bevorzugten Ausführungsform werden zur Befestigung der Bodenkomponente (iii b) an der tragenden Komponente (i) 3 oder 4 Abstandshalter (vi) verwendet. Die Köpfe der Schrauben zum Befestigen der Abstandshalter (vi) an der Bodenkomponente (iii b) ragen vorzugsweise über die Bodenkomponente heraus. In einer besonders bevorzugten Ausführungsform können die Schrauben bei Gebrauch der selbsttragenden Verbundkomponente, vorzugsweise bei Gebrauch der selbsttragenden Komponente als Warmwasserspeicher, verwendet werden, um eine vertikale Ausrichtung der Längsachse des Verbundelements beim Abstellen der Bodenkomponente auf eine Fläche zu gewährleisten.

Während der Umsetzung der Isocyanate mit gegenüber Isocyanaten reaktiven Verbindungen zur Komponente (ii) weist die Bodenkomponente, die Deckenkomponente oder Boden und Deckenkomponente in einer Ausführungsform des weiteren eine Komponente zur Verstärkung (v) auf. Diese Komponente zur Verstärkung (v) wird dabei an der vom Raum (iv) abgewandten Seite der Bodenkomponente (iii b) und/oder der Deckenkomponente (iii c) angeordnet und ebenfalls an der tragenden Komponente befestigt. Die Befestigung erfolgt vorzugsweise durch verschrauben mit der tragenden Komponente (i).

In einer Ausführungsform kann die Komponente zur Verstärkung (v) eine beliebige Form und Größe aufweisen. In einer weiteren Ausführungsform reicht diese vorzugsweise aber nicht über die Mantelkomponente (iii a) heraus. Vorzugsweise ist die Komponente zur Verstärkung (v) eben. Die Komponente zur Verstärkung (v) kann aus jedem Material, wie Kunststoffen oder Metallen, bestehen. Vorzugsweise besteht die Komponente zur Verstärkung (v) aus Metall, insbesondere aus Stahl.

Die Komponente zur Verstärkung (v) kann nach dem Ausschäumen von der Verbundkomponente entfernt werden.

Die Komponente (ii) der erfindungsgemäßen Verbundelemente weist bevorzugt eine Dichte von 0,02 bis 0,10, besonders bevorzugt 0,03 bis 0,05 g/cm³ auf. Die Reaktionsmischung zur Herstellung der Komponente (ii) kann jedes Treibmittel aufweisen. Bevorzugt weist die Reaktionsmischung zur Herstellung der Komponente (ii) keine halogenierten Kohlenwasserstoffe auf. Besonders bevorzugt weist die Reaktionsmischung zur Herstellung der Komponente (ii) Kohlenwasserstoffe auf, insbesondere Pentan und Isomere des Pentans .

Bevorzugt wird der Hartschaumstoff (ii) von den Komponenten (i) und (iii), gegebenenfalls mit Ausnahme von Leitungen in den Innenraum des Warmwasserbehälters und zur Befüllung des Raumes zwischen (i) und (iii) mit den Ausgangskomponenten zur Herstellung von (ii), umschlossen. Die Dicke von (ii), d.h. der Abstand zwischen (i) und (iii) beträgt bevorzugt zwischen 5 und 150 mm.

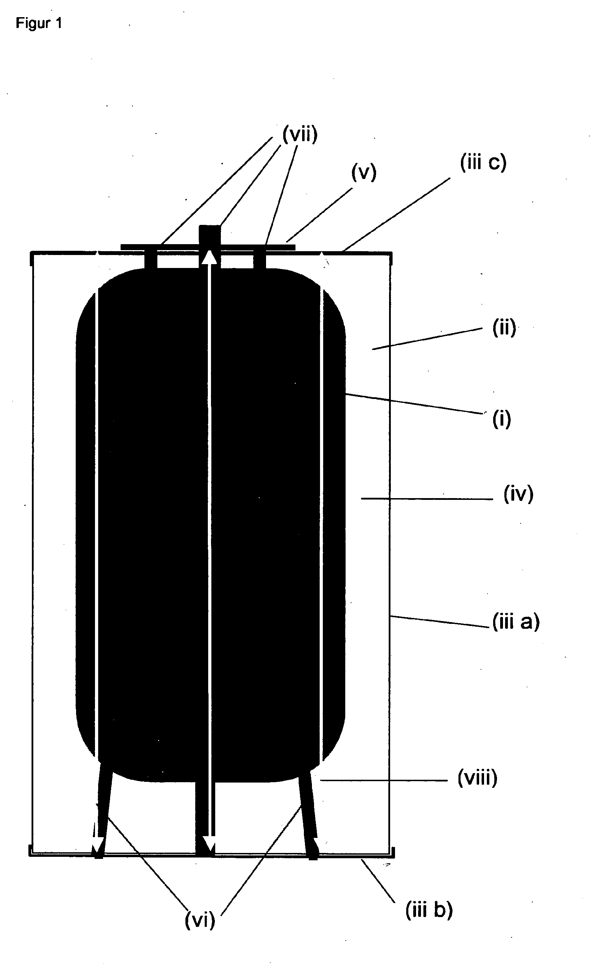

Eine bevorzugte Ausführungsform der Erfindung ist in Figur 1 dargestellt. Der in dieser Figur abgebildete Behälter, beispielsweise ein Warmwasserspeicher, enthält bespielsweise den eigentlichen Behälter als tragende Komponente (i), und als weitere kompakte Komponente (iii) eine äußere Hülle auf, bestehend aus Mantelkomponente (iii a), Bodenkomponente (iii b) und Deckenkomponente (iii c). Die Deckenkomponente (iii c) weist des weiteren eine Komponente (v) zur Verstärkung auf. In dieser Ausführungsform wird die Mantelkomponente (iii a) durch einen überstehenden Rand der Bodenkomponente (iii b) und der Deckenkomponente (iii c) gehalten. Der Druck des entstehenden Schaums, dargestellt durch die Pfeile (viii) wird von der Bodenkomponente (iii b) und der Deckenkomponente (iii c) aufgenommen und auf die tragende Komponente (i) abgeleitet.

In einer besonders bevorzugten Ausführungsform der Erfindung handelt es sich bei einem erfindungsgemäßen Verbundelement um einen thermisch isolierten Behälter für Flüssigkeiten, insbesondere um einen Warmwasserspeicher.

Die Umsetzung von Isocyanaten mit gegenüber Isocyanaten reaktiven Verbindungen in Gegenwart von Treibmitteln und gegebenenfalls Katalysatoren, Hilfs- und/oder Zusatzstoffen zu den Polyisocyanat-Polyadditionsprodukten, die die Komponente (ii) bilden, ist allgemein bekannt und vielfältig beschrieben.

Die Umsetzung zur Herstellung von (ii) wird bevorzugt derart durchgeführt, dass der bei dem Schäumprozess entstehende Druck (i) und/oder (iii) nicht deformiert, d.h. dass die Reaktionsmischung enthaltend die Isocyanate, die gegenüber Isocyanaten reaktven Verbindungen, die Treibmittel und gegebenenfalls die Katalysatoren, Hilfs- und/oder Zusatzstoffe zur Herstellung des Hartschaumstoffs (ii) auf der Basis von Polyisocyanat-Polyadditionsprodukten bei der Umsetzung von 163 g Reaktionsmischung in einem geschlossenen, zylindrischen Behältnis mit einem Volumen von 4,08 I einen maximalen Druck in dem Behältnis entwickelt, der kleiner als 1,6 bar, bevorzugt zwischen 1,02 und 1,5 bar ist. In einer weiteren Ausführungsform liegt der Druck zwischen 1,08 und 1,5 bar, insbesondere zwischen 1,25 und 1,5 bar. Der bei dem Verschäumen entstehende Druck kann durch allgemein bekannte Verfahren gemessen werden.

Als Isocyanate, bevorzugt organische und/oder modifizierte organische Polyisocyanate, kommen die an sich bekannten aliphatischen, cycloaliphatischen, araliphatischen und vorzugsweise aromatischen mehrwertigen Isocyanate in Frage, wie sie beispielsweise in EP-A 0 421 269 (Spalte 4, Zeile 49, bis Spalte 6, Zeile 22) oder in EP-A 0 719 807 (Spalte 2, Zeile 53, bis Spalte 4, Zeile 21) aufgeführt sind.

Besonders bewährt haben sich Diphenylmethan-diisocyanat-Isomerengemische oder Roh-MDI mit einem Diphenylmethan-diisocyant-Isomerengehalt von 33 bis 55 Masse-% und urethangruppenhaltige Polyisocyanatgemische auf Basis von Diphenylmethandiisocyanat mit einem NCO-Gehalt von 15 bis 33 Masse-%.

Als gegenüber Isocyanaten reaktive Verbindungen können Verbindungen mit mindestens zwei gegenüber Isocyanaten reaktiven Wasserstoffatomen verwendet werden. Hierfür kommen Verbindungen in Frage, die zwei oder mehrere reaktive Gruppen, ausgewählt aus OH-Gruppen, SH-Gruppen, NH-Gruppen, NH₂-Gruppen und CH-aciden Gruppen im Molekül tragen.

Zweckmäßigerweise werden solche mit einer Funktionalität von 2 bis 8, vorzugsweise 2 bis 6, und einem mittleren Molekulargewicht von 60 bis 8000 verwendet. Bewährt haben sich z.B. Polyether-polyamine und/oder vorzugsweise Polyole ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatschen Polycarbonate oder Mischungen aus mindestens zwei der genanten Polyole, die bevorzugt ein mittleres Molekulargewicht von 301 bis 4000 aufweisen. Vorzugsweise Anwendung finden Polyester-polyole und/oder Polyether-polyole. Die Hydroxylzahl der Polyhydroxylverbindungen beträgt bevorzugt 100 bis 850, besonders bevorzugt 200 bis 600 mg KOH/g. Nähere Ausführungen zu den einsetzbaren Verbindungen sind beispielsweise aus EP-A-0 421 269 (Spalte 6, Zeile 23, bis Spalte 10, Zeile 5) oder EP-A-0 719 807 (Spalte 4, Zeile 23, bis Spalte 7, Zeile 55) ersichtlich. Die Hartschaumstoffe können ohne oder unter Mitverwendung von Kettenverlängerungs- und/oder Vernetzungsmitteln hergestellt werden. Zur Modifizierung der mechanischen Eigenschaften, z. B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel können Verbindungen mit Molekulargewichten kleiner als 400, vorzugsweise von 60 bis 300 verwendet werden, die üblicherweise eine Funktionalität von 2 bis 6 aufweisen. Nähere Ausführungen zu diesen und weiteren einsetzbaren Verbindungen sind beispielsweise aus EP-A-0 421 269 (Spalte 10, Zeilen 6 bis 48) zu entnehmen.

Sofern zur Herstellung der Hartschaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der gegenüber Isocyanaten reaktiven Verbindungen mit einem Molekulargewicht von 60 bis 8000, zum Einsatz.

Als Treibmittel können alle bekannten Treibmittel verwendet werden. Denkbar sind sowohl chemische als auch physikalische Treibmittel sowie Mischungen daraus. Unter chemischen Treibmitteln versteht man Verbindungen, die durch Reaktion mit Isocyanat gasförmige Produkte bilden. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, sowie Ether, Ester, Ketone und/oder Acetale. Vorzugsweise wird als Treibmittel Wasser, Pentan oder Isopentan verwendet, gegebenenfalls in Mischungen untereinander oder mit weiteren Treibmitteln.

Als Katalysatoren zur Herstellung der PUR- und/oder PUR/PIR-Hartschaumstoffe werden insbesondere Verbindungen verwendet, die die Reaktion der reaktiven Wasserstoffatome, insbesondere Hydroxylgruppen, enthaltenden Verbindungen der Komponente (b) mit den organischen, gegebenenfalls modifizierten Polyisocyanaten (a) stark beschleunigen. Die Isocyanatgruppen können durch geeignete Katalysatoren aber auch miteinander zur Reaktion gebracht werden, wobei neben den Addukten zwischen Isocyanaten und den Verbindungen mit wasserstoffaktiven Gruppen vorzugsweise Isocyanuratstrukturen entstehen.

Als Katalysatoren werden also insbesondere solche Stoffe verwendet, die Reaktionen der Isocyanate beschleunigen, insbesondere die Urethan-, Harnstoff- und Isocyanuratbildung.

Bevorzugt hierfür sind tertiäre Amine, Zinn- und Bismutumverbindungen, Alkali- und Erdalkalicarboxylate, quaternär Ammoniumsalze, s-Hexahydrotriazine und Tris-(dialkylaminomethyl)-phenole.

Nähere Angaben zu einsetzbaren Katalysatoren sind beispielsweise aus EP-A-0 719 807 (Spalte 9, Zeilen 5 bis 56) zu entnehmen.

Der Reaktionsmischung zur Herstellung der PUR- und/oder PUR/PIR-Hartschaumstoffe können gegebenenfalls auch noch Hilfsmittel und/oder Zusatzstoffe einverleibt werden. Genannt seien beispielsweise oberflächenaktive Substanzen, Schaumstabilisatoren, Zellregler, Flammschutzmittel, Füllstoffe, Farbstoffe, Pigmente, Hydrolyseschutzmittel, fungistatische und bakteriostatisch wirkende Substanzen. Nähere Ausführungen zu den einsetzbaren Verbindungen sind beispielsweise aus EP-A-0 421 269 (Spalte 12, Zeile 55, bis Spalte 14, Zeile 16) oder EP-A-0 719 807 (Spalte 9, Zeile 58, bis Spalte 13, Zeile 17) ersichtlich.

Zur Herstellung der PUR-Hartschaumstoffe werden die organischen und/oder modifizierten organischen Polyisocyanate und die gegenüber Isocyanaten reaktiven Verbindungen in solchen Mengen zur Umsetzung gebracht, dass das Äquivalenz-Verhältnis von NCO-Gruppen der Polyisocyanate zur Summe der reaktiven Wasserstoffatome 0,85 bis 1,75:1, vorzugsweise 1,0 bis 1,3:1 und insbesondere 1,1 bis 1,2:1, beträgt. Falls die Hartschaumstoffe zumindest teilweise Isocyanuratgruppen gebunden enthalten, wird üblicherweise ein Verhältnis von NCO-Gruppen der Isocyanate zur Summe der reaktiven Wasserstoffatome der gegenüber Isocyanaten reaktiven Verbindungen von 1,5 bis 60:1, vorzugsweise 3 bis 8:1, angewandt.

Die Hartschaumstoffe werden vorteilhafterweise nach dem one-shot-Verfahren, beispielsweise mit Hilfe der Hochdruck- oder Niederdruck-Technik hergestellt. Als besonders vorteilhaft hat es sich erwiesen, nach dem Zweikomponenten-Verfahren zu arbeiten und die gegenüber Isocyanaten reaktiven Verbindungen, die Treibmittel und gegebenenfalls Katalysatoren, Hilfs- und/oder Zusatzstoffe in der Komponente (A), der sogenannten Polyolkomponente, zu vereinigen und als Komponente (B), der sogenannten Isocyanatkomponente, die Isocyanate oder Mischungen aus den Isocyanaten und gegebenenfalls Treibmittel zu verwenden.

Die Herstellung von Sandwichelementen, Rohren oder der anderen erfindungsgemäßen Artikel ist allgemein bekannt.

Beispielsweise werden die Ausgangskomponenten bei einer Temperatur von 15 bis 80 °C, vorzugsweise von 18 bis 25 °C, gemischt und in den Raum (iv), gegebenenfalls unter erhöhtem Druck, eingebracht.

Vorteile der erfindungsgemäßen Verbundelemente sind, dass diese im wesentlichen ebene Boden und Deckenelemente aufweisen und die Verbundelemente somit als Standelemente verwendet werden können. Ein weiterer Vorteil der erfindungsgemäßen Verbundelemente ist, dass beim Wechsel der Treibmittelkomponente von halogenierten Kohlenwasserstoffen zu umweltfreundlichen Treibmitteln keine Stützwerkzeuge verwendet werden müssen und, abgesehen von geringfügigen Änderungen an der Bodenkomponente (iii b) und an der Deckenkomponente (iii c), keine Neukonstruktion der äußeren Hülle erforderlich ist. Daher muss die Produktion der Verbundelemente nicht umgestellt werden.

Weiter sind durch die geringen Anforderungen an die Form schnelle Modellwechsel möglich. Aufgrund der kostengünstigen Fertigungsmöglichkeiten ohne hohe Kosten durch nötige Stützwerkzeuge oder die spezielle Konstruktion von einer äußeren Hülle, welche die Kräfte des Schäumdrucks aufnimmt, ist es möglich, selbst Kleinserien kostengünstig zu produzieren oder die Produktion unterschiedlicher Modelle schnell zu wechseln.

## Patentansprüche

1. Verfahren zur Herstellung eines Verbundelements enthaltend mindestens eine kompakte Komponente (i), Hartschaumstoff auf Basis von Polyisocyanat-Additionsprodukten (ii) und mindestens eine weitere kompakte Komponente (iii), bei dem man
mindestens eine tragende, kompakte Komponente (i) und mindestens eine weitere kompakte Komponente (iii), zur Verfügung stellt und die weitere Komponente (iii) die tragende Komponente (i) umgibt und mit dieser einen Raum (iv) bildet, und
im Raum (iv) Isocyanate mit gegenüber Isocyanaten reaktiven Verbindungen umsetzt, wobei die Reaktonsmischung des weiteren Treibmittel und gegebenenfalls Katalysatoren, Hilfs- und/oder Zusatzstoffen enthält,
**dadurch gekennzeichnet, dass** die weitere kompakte Komponente (iii) eine Mantelkomponente (iii a), eine Bodenkomponente (iii b) und eine Deckenkomponente (iii c) aufweist, die zur Mantelkomponente (iii a) abschließen, und wobei die Bodenkomponente (iii b), und die Deckenkomponente (iii c) jeweils an der tragenden Komponente (i) befestigt sind oder die Bodenkomponente (iii b), und/oder die Deckenkomponente (iii c) durch eine Komponente zur Verstärkung (v), die an der vom Raum (iv) abgewandten Seite der Bodenkomponente (iii b) und/oder der Deckenkomponente (iii c) angeordnet ist und an der tragenden Komponente (i) befestigt ist, gehalten werden.

2. Verfahren nach Anspruch 1, **dadurch gekennzeichnet, dass** die Bodenkomponente (iii b) und die Deckenkomponente (iii c) jeweils im wesentlichen eben sind.

3. Verfahren nach Anspruch 1 oder 2, **dadurch gekennzeichnet, dass** (i) die Mantelkomponente (iii a), die Bodenkomponente (iii b) und die Deckenkomponente (iii c) einen zylindrischen Körper bilden.

4. Verfahren nach Anspruch 1 bis 3, **dadurch gekennzeichnet, dass** das Treibmittel im wesentlichen Pentan ist.

5. Verfahren nach Anspruch 1 bis 4, **dadurch gekennzeichnet, dass** das Verbundelement ein thermisch isolierter Behälter für Flüssigkeiten ist.

6. Verfahren nach Anspruch 1 **dadurch gekennzeichnet, dass** man nach der Herstellung des Hartschaumstoffs die Befestigung zwischen der tragenden Komponente (i) und der Bodenkomponente (iii b) und/oder der tragenden Komponente (i) und der Deckenkomponente (iii c) löst.

## Claims

1. A process for producing a composite element comprising at least one compact component (i), rigid foam based on polyisocyanate addition products (ii) and at least one further compact component (iii), wherein
at least one supporting, compact component (i) and at least one further compact component (iii) are made available and the further component (iii) surrounds the supporting component (i) and together with this forms a space (iv), and isocyanates are reacted with compounds which are reactive toward isocyanates in the space (iv), where the reaction mixture further comprises blowing agents and, if appropriate, catalysts, auxiliaries and/or additives,
wherein the further compact component (iii) has a wall component (iii a), a bottom component (iii b) and a cover component (iii c), which end at the wall component (iii a), and with the bottom component (iii b) and the cover component (iii c) each being fastened to the supporting component (i) or the bottom component (iii b) and/or the cover component (iii c) being held by a component for reinforcement (v) which is arranged on the side of the bottom component (iii b) and/or of the cover component (iii c) facing away from the space (iv), and is fastened to the supporting component (i).

2. The process according to claim 1, wherein the bottom component (iii b) and the cover component (iii c) are each essentially flat.

3. The process according to claim 1 or 2, wherein (i) the wall component (iii a), the bottom component (iii b) and the cover component (iii c) form a cylindrical body.

4. The process according to any of claims 1 to 3,
wherein the blowing agent is substantially pentane.

5. The process according to any of claims 1 to 4,
wherein the composite element is a thermally insulated container for liquids.

6. A process according to claim 1, wherein the fastening between the supporting component (i) and the bottom component (iii b) and/or the supporting component (i) and the cover component (iii c) is released after production of the rigid foam.

## Revendications

1. Procédé pour la production d'un élément composite contenant au moins un composant compact (i), une mousse rigide (ii) à base de produits d'addition de polyisocyanates et au moins un autre composant compact (iii), dans lequel
on dispose au moins un composant compact (i) porteur et au moins un autre composant compact (iii) et l'autre composant (iii) entoure le composant (i) porteur et forme avec celui-ci un espace (iv), et
on fait réagir dans l'espace (iv) des isocyanates avec des composés réactifs vis-à-vis d'isocyanates, le mélange réactionnel contenant en outre des agents d'expansion et éventuellement des catalyseurs, des adjuvants et/ou des additifs,
**caractérisé en ce que** l'autre composant compact (iii) comporte un composant d'enveloppe (iii a), un composant de fond (iii b) et un composant de couverture (iii c), qui ferment le composant d'enveloppe (iii a), et le composant de fond (iii b) et le composant de couverture (iii c) étant fixés chacun au composant porteur (i) ou le composant de fond (iii b) et/ou le composant de couverture (iii c) étant maintenu(s) par un composant pour le renforcement (v) qui est disposé sur le côté opposé à l'espace (iv) du composant de fond (iii b) et/ou du composant de couverture (iii c) et étant fixé(s) au composant (i) porteur.

2. Procédé selon la revendication 1, **caractérisé en ce que** le composant de fond (iii b) et le composant de couverture (iii c) sont chacun essentiellement plans.

3. Procédé selon la revendication 1 ou 2, **caractérisé en ce que** (i) le composant d'enveloppe (iii a), le composant de fond (iii b) et le composant de couverture (iii c) forment un corps cylindrique.

4. Procédé selon l'une quelconque des revendications 1 à 3, **caractérisé en ce que** l'agent porogène est essentiellement du pentane.

5. Procédé selon l'une quelconque des revendications 1 à 4, **caractérisé en ce que** l'élément composite est un contenant isolé thermiquement pour liquides.

6. Procédé selon la revendication 1, **caractérisé en ce qu'**après la production de la mousse rigide on défait la fixation entre le composant porteur (i) et le composant de fond (iii b) et/ou entre le composant porteur (i) et le composant de couverture (iii c).
